# EUROPEAN PATENT APPLICATION

(11) **EP 1 367 522 A1**
(43) Date of publication of application: **03.12.2003**
(21) Application number: 03252172.6
(22) Date of filing: 05.04.2003
(51) Int. Cl.: G06F 17/60, H04L 12/58, H04L 29/14

(54) **Best effort match email gateway extension**

(30) Priority: 31.05.2002 GB 0212593
(71) Applicant: Mitel Knowledge Corporation, Ottawa, Ontario K2K 2W7 (CA)
(72) Inventor: Taylor, David R., Stittsville, Ontario K2S 2A3 (CA)
(74) Representative: Naismith, Robert Stewart

(57) **Abstract**

An Email gateway extension is provided which assists in the resolution of Email addresses. The system uses name matching and heuristic techniques in an attempt to resolve Email addresses. The system incorporates a secondary look-up table to identify equivalents of correct Email recipient addresses, and heuristic matching methods to resolve addresses according to phonetic name matching techniques and typing error compensation.

## Description

### FIELD OF THE INVENTION

This invention relates in general to electronic mail (Email) servers, and more particularly to a method and apparatus for resolving incorrect email addresses.

### BACKGROUND OF THE INVENTION

Email addresses currently have to be typed exactly in order to resolve to the appropriate recipient. Unknown Email addresses, typographical errors, and "best guess" addresses commonly result in the Email being dropped or returned to sender.

There exists an unsolved need in the art for a system which is capable of resolving Email addresses that are heuristically sufficiently close to a known good address as to be assumed to be intended for that address, thereby reducing the number of dropped and returned messages.

Email address name resolution is handled in existing applications through the use of look-up tables containing an incoming Email recipient list. The look-up table list is accessed on an entry-by-entry basis in an effort to locate a match. Each recipient is matched (or not) depending upon the presence (or absence) of the recipient's name as an entry in the look-up table. Additional combinations and permutations can be added to the look-up table to account discretely for possible variations in address naming or typographical errors. These additions to the table are common in the prior art but are ad hoc in implementation. This does not provide ease in table maintenance (as the address list updates) nor does this provide any uniformity in cross checking for all persons within a corporation.

### SUMMARY OF THE INVENTION

According to the present invention, a Best Effort Match (BEM) Email gateway extension is provided which assists in the resolution of Email addresses. Thus, instead of generating a "return to sender" message for each incorrectly entered email address, the system uses name matching and heuristic techniques in an attempt to resolve the address. The system incorporates a secondary look-up table to identify "proper" names in the Email address, and a heuristic name matching engine to resolve addresses that are "close enough". The secondary look-up table provides [first name]. [last name]@company.com resolution while permitting an employee to customize his/her preferred Email address to, for example, [initials]@company.com. The secondary lookup table also is used to manage equivalent name sets such as {Robert, Rob, Bob}, {William, Will, Bill}, {Harold, Hal, Harry}, etc.

Where the system resolves an incorrect Email address, the Email is forwarded to the correct recipient and a message is returned to the sender indicating the correct Email address of the recipient.

Furthermore, for those Email addresses which cannot be resolved using the BEM feature, the system according to the present invention provides suggestions for close matches within a target company, rather than explaining its inability in resolving the Email address. For example, if an Email addressed to John_doe@mycorp.com is resolved, a return message is issued by the system which indicates that the message was forwarded to jd@mycorp.com. Otherwise, if the address cannot be resolved or when a clean resolution is not found, the sender is advised of any close matches (e.g. the return message can take the form of "john_doe@mycorp.com was not resolved, but postmaster@mycorp.com did find jean_doh@mycorp.com and jon_toe@mycorp.com. Please resend if appropriate.")

### BRIEF DESCRIPTION OF THE DRAWINGS

A preferred embodiment of the present invention is described herein below with reference to the drawings in which:
Figure 1 is a block diagram of a best effort match Email gateway according to the present invention;
Figure 2 is a flowchart showing the method for resolving incorrect email addresses in accordance with the present invention; and
Figure 3 is a diagram showing construction of secondary email addresses in accordance with the present invention.

### DETAILED DESCRIPTION OF THE PREFERRED EMBODIMENT

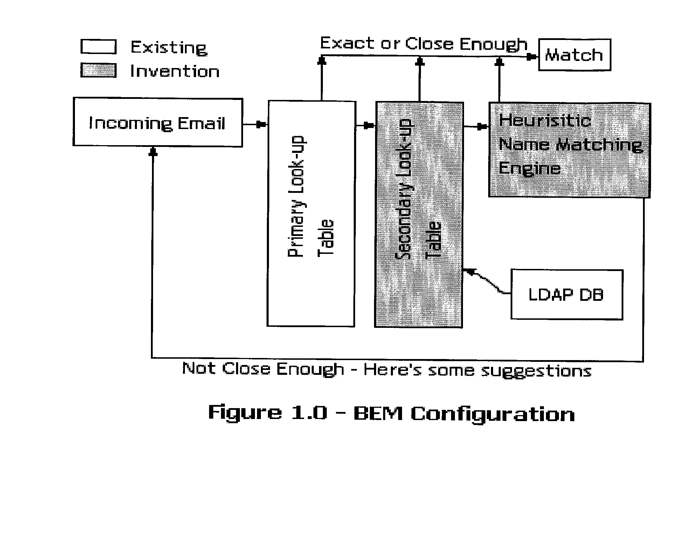

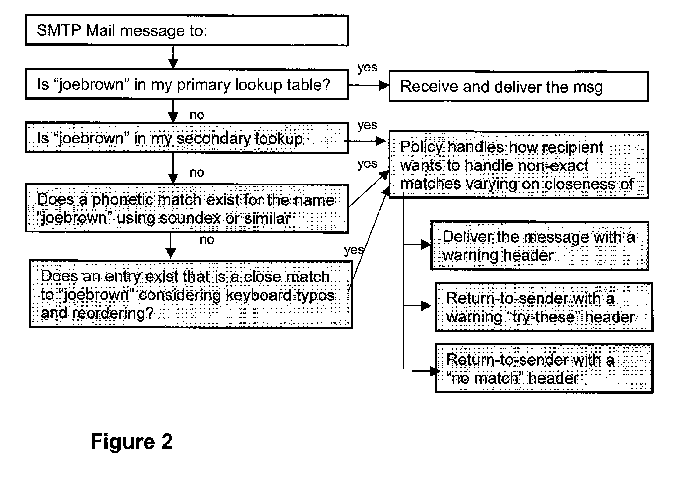

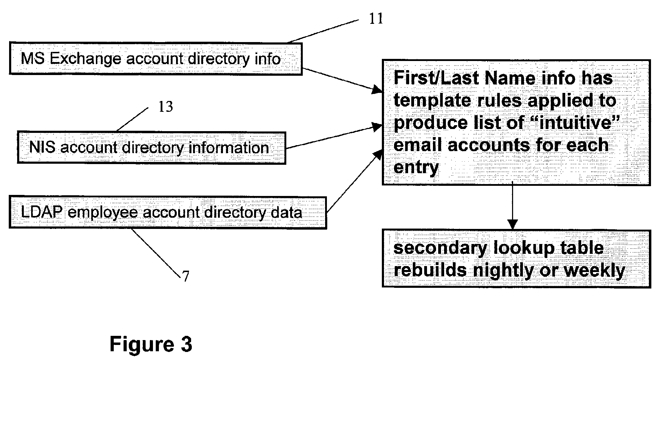

A typical email gateway, such as an SMTP (Simple Mail Transfer Protocol) gateway, must validate the recipient list for those addresses within its domain (ref. Domain Name system). With reference to Figures 1 and 2, the method and apparatus of the present invention are described with reference to an exemplary domain "mycorp.com". A name validation system is shown comprising a primary look-up table 1 for detecting an explicit match between the address of an inbound recipient and the list of known email accounts within mycorp.com. An identical entry in the Table 1 is required to produce an exact match, as is well known in the art. The primary table can be a simple, file-based lookup as in the case of sendmail, or a database lookup, as in the case of Microsoft Exchange. If explicit matching via the primary look-up table 1 is unsuccessful, a secondary look-up table 5 is used to attempt to match the address to a proper name which, according to the preferred embodiment, is built from a company directory via an LDAP database 7, a Microsoft Exchange account database 11, and/or an NIS account database 13 as shown in Figure 3. The various sources provide first and last name information that is then used to construct a wider set of possible email addresses. Thus, "Joe Brown" produces a set of possible email accounts based on rules defined in a configuration file. Resulting "intuitive" email account names for Joe Brown may be jbrown, brownj, joeb, josephbrown, j.brown, j_brown, etc., depending upon how extensive the configured rules are applied. If the matching attempt via the secondary look-up table 5 is also unsuccessful, the address is processed using heuristic matching methods 9 to attempt a "close enough" or fuzzy match.

The secondary look-up table 5 contains data entries of the possible form [first name].[last name]@company.com, as well as [last name].[first name]@company.com, and uses explicit matching methods to attempt address resolution. The string search and compare methodology is the same as used in the prior art primary look-up table 1. If a match is successfully obtained in the secondary look-up table 5, the Email is forwarded using methods such as SMTP, as used in the prior art, to the correct address of the recipient, with a prefix message telling the recipient of the matching technique used (e.g. "sender@ace.com has not used your correct Email address but the Postmaster believes this message is for you as your name matches closely with the address specified."). This method is identical to current methods used in existing email gateways such as sendmail.

The heuristic name matching engine 9 resolves misspellings and uses approximation and phonetic name matching through application of existing, advanced name matching routines such as:
1) the Russell Soundex method, as set forth in D. E. Knuth, "The Art of Computer Programming, Vol. 3, Sorting and Searching", Addison Wesley, 1973, pg 391-392;
2) the Henry method (Soundex for French) and FONEM (French names only), as set forth in Gerard Bouchard and Christian Pouyez, "Name Variations and Computerized Record Linkage, Historical Methods, Vol. 13, No. 2", 1980, pg 119-125;
3) the Daitch-Mokotoff method (Soundex for Slavic and German) and Metaphone, as set forth in Brian Bonner Mavrogeorge, "Coding and Techniques", 1993; and
4) Guth Name-Matching, as set forth in Gloria J. A. Guth, "Surname Spellings and Computerized Record Linkage, Historical Methods Newsletter, Vol. 10, No.1", Dec 1976, pg 10-19.

A review of the foregoing name matching routines is set forth in A. J. Lait and B. Randell, "An Assessment of Name Matching Algorithms", Department of Computing Science, University of Newcastle upon Tyne (http://www.cs.ncl.ac.uk/∼brian.randell/home.informal/Genealogy/NameMatching.txt).

Since the Soundex and Metaphone matching methods are well established, these methodologies are applied in implementing the name-matching engine 9 according to the preferred embodiment. The application of these methods is identical to their application in any other string matching applications. The fuzzy matching methods implemented by the name-matching engine 9 can produce multiple match results which must be handled in any one of the following ways:
1. Gateway sends a copy of the email to the matched recipients as is currently done by sendmail and MS Exchange implementations today.
2. The message is returned to sender with a list of matches considered "close"
3. The matching methodology attempts to "rank order" the matches and forwards the message on to the recipient most closely matching the requested address. The measure of closeness in the matches is determined by the matching method used, and a policy threshold is preset in the implementation below when a match is considered to be not "close" enough.
4. The heuristic matching methods 9 review gateway logs for each of the "close" match recipients to determine if any have previously received Email from this sender. This requires the gateway to be able to maintain transaction logs for email passed into the mycorp.com domain.

In summary, the system according to the present invention tracks Email flow through a gateway to provide fast matching even when typographical errors have been introduced into Email addresses.

All such alternative embodiments and variations are believed to be within the scope of the invention as defined by the claims appended hereto.

## Claims

1. An Email gateway, comprising:
a primary look-up table containing an incoming Email recipient list;
means for receiving from a sender an incoming Email identified by a recipient address;
a secondary look-up table containing data entries corresponding to variations of individual entries in said incoming Email recipient list;
a heuristic matching engine for resolving misspellings via approximation and phonetic name matching methods; and
means for comparing said recipient address with said individual entries in said incoming Email recipient list, and:
in the event of a match with one of said individual entries then forwarding said incoming Email to a recipient identified by said one of said individual entries;
in the event of no match with said individual entries then comparing said recipient address with said data entries in said secondary look-up table, and:
in the event of a match with one of said data entries then forwarding said incoming Email to a recipient identified by said one of said data entries;
in the event of no match with said data entries then forwarding said incoming Email to said heuristic name matching engine for effecting a best effort matching to a valid recipient Email address; and in the event of a best effort match then forwarding said incoming Email to a user identified by said valid recipient Email address, and otherwise returning an error message to said sender.

2. The Email gateway of claim 1, further comprising an LDAP database and other mail user name sources for building said data entries in said secondary look-up table.

3. The Email gateway of claim 1 wherein each of said data entries in said secondary look-up table is of the form [first name].[last name]@company.com.

4. The Email gateway of claim 1 wherein each of said data entries in said secondary look-up table is of the form [last name].[first name]@company.com.

5. The Email gateway of claim 3, further comprising means for attaching a prefix to said incoming Email message for indicating to said recipient address was matched to said one of said data entries.

6. The Email gateway of claim 4, further comprising means for attaching a prefix to said incoming Email message for indicating to said recipient address was matched to said one of said data entries.

7. The Email gateway of claim 1, wherein said heuristic name matching engine utilizes a name matching routine selected from the group consisting of:
a) Russell Soundex method;
b) Henry method and FONEM;
c) Daitch-Mokotoff method and Metaphone; and
d) Guth Name-Matching.
